# EUROPEAN PATENT SPECIFICATION

(11) **EP 2 965 904 B1**
(45) Date of publication and mention of the grant of the patent: **22.04.2020**
(21) Application number: 14761106.5
(22) Date of filing: 07.03.2014
(51) Int. Cl.: B41M 5/00, B41M 1/34, B32B 27/00, C09D 11/00, B41M 1/12, B41M 7/00

(54) **MULTILAYER STRUCTURE MANUFACTURING METHOD**
HERSTELLUNGSVERFAHREN FÜR EINE MEHRSCHICHTIGE STRUKTUR
PROCÉDÉ DE FABRICATION DE STRUCTURE MULTICOUCHE

(30) Priority: 08.03.2013 JP 2013046466
(43) Date of publication of application: 13.01.2016
(73) Proprietor: FUJIFILM Corporation, Tokyo 106-8620 (JP)
(72) Inventor: UMEBAYASHI Tsutomu, Ashigarakami-gun Kanagawa 258-8577 (JP)
(74) Representative: Hoffmann Eitle
(86) International application number: PCT/JP2014/055911
(87) International publication number: WO 2014/136924

(56) References cited:
- EP-A1- 2 439 244
- EP-A1- 2 497 647
- WO-A1-2008/032722
- WO-A1-2009/118507
- WO-A1-2012/010302
- DE-A1-102009 004 783
- JP-A- H0 965 946
- JP-A- 2000 093 890
- JP-A- 2002 200 455
- JP-A- 2006 263 920
- JP-A- 2008 536 791
- US-A1- 2007 085 983

## Description

The present invention relates to a process for producing a multilayer structure.

As tiles used as indoor or outdoor wall materials, floor materials, etc., that is, exterior tiles, interior tiles, floor tiles, etc., patterned tiles with various patterns have been used in recent years.

Patent Document 1 describes a method for imparting decoration to a glass or ceramic product, comprising a covering step of covering a substrate (1) by providing a lower layer (2) of a glass frit compound by means of for example screen printing or inkjet printing, providing directly on the lower layer (2) of the glass frit compound at least one, and preferably a single layer (3), of at least one type of pigment compound by means of inkjet printing so as to form an image, and providing on the layer (3) of said at least one type of pigment compound an upper layer (4) of a glass frit compound by means of inkjet printing, and a heating step of heating the glass or ceramic product provided with the layers (2, 3, 4) until it reaches at least the melting temperature of the glass frit particles of the lower and upper layers (2, 4).
Patent Document 1: Published Japanese translation 2007-514804 of a PCT application

The method, as described in Patent Document 1, in which an image layer is formed by calcining a pigment and a glaze (glass frit) at high temperature has the problems of narrow pigment color reproduction and design limitations.

Furthermore, since high temperature calcination is required, there are the problems that large-scale equipment is necessary for production and the production cost is high.

EP-A-2 439 244 discloses a process for producing a layered structure comprising forming on a substrate such as glass, an image layer by applying a UV-curable composition comprising a coloured pigment by means of inkjet printing and subsequently curing the applied composition by means of UV exposure.

JP-A-2002-200455 discloses a multilayer structure comprising an undercoating film formed from a powder paint, an intermediate coating film formed from a colour pigment-containing curable polysiloxane-based inorganic coating material composition and a top coating film formed from a photocatalyst-containing curable organopolysiloxane-based inorganic coating material composition. The intermediate coating film contains a colour pigment, organosiloxane, a partially hydrolysed condensation product thereof or a curable organopolysiloxane. The top coating film contains a photocatalyst for activating a curable coating film.

The present invention solves the above problems. That is, the object of the present invention is to provide a process for producing a multilayer structure that does not require calcining at high temperature and large-scale equipment for production, that has low production cost and, furthermore, that has performance characteristics with respect to tiles such as for example surface hardness and excellent impact resistance and durability (surface hardness and impact resistance being unimpaired for a long period of time and there being no discoloration).

According to the present invention, there is provided a process for producing a multilayer structure comprising the steps of:
(a) forming, above a substrate layer (Layer 1), an image layer (Layer 2) by applying a UV-curable composition comprising a colored pigment, a radically polymerizable compound comprising a (meth)acryloyl group-containing silane coupling agent and/or a phosphoric acid ester group-containing (meth)acrylate compound and a radical polymerization initiator by means of inkjet printing or screen printing and subsequently radically polymerizing the applied composition by means of UV exposure, and
(b) forming, above Layer 2, a protective layer (Layer 3) by applying a composition comprising an organosilicon compound and using a condensation reaction of the organosilicon compound.

Preferably the organosilicon compound in Layer 3 comprises a siloxane oligomer.

Preferably Layer 1 is glass or ceramic.

Preferably the organosilicon compound in Layer 3 comprises a (meth)acryloyl group-containing polysiloxane compound and/or a (meth)acryloyl group-containing silane coupling agent.

Preferably Layer 3 is a layer formed by a condensation reaction of a composition comprising an organosilicon compound and a curing agent.

Preferably the process further comprises carrying out UV exposure after forming Layer 3.

Preferably the process further comprises heating after forming Layer 1, Layer 2 and Layer 3.

In accordance with the present invention, there can be provided a multilayer structure that does not require calcining at high temperature and large-scale equipment for production, that has low production cost and, furthermore, that has performance characteristics with respect to tiles such as for example surface hardness and excellent impact resistance and durability (surface hardness and impact resistance being unimpaired for a long period of time and there being no discoloration).

The multilayer structure comprises, in sequence, (Layer 1) a substrate layer, (Layer 2) an image layer containing a colored pigment, and (Layer 3) a protective layer formed by a condensation reaction of an organosilicon compound.

Furthermore, '(Layer 1) a substrate layer', etc. is also simply called 'Layer 1', etc. Moreover, Layer 1 is also simply called 'substrate' or 'substrate layer', Layer 2 is also simply called 'image layer' and Layer 3 is also simply called 'protective layer', etc.

In the present invention, the notation 'X to Y' expressing a numerical range has the same meaning as that of 'at least X but no greater than Y' (X < Y) or 'no greater than X but at least Y' (X > Y).
Furthermore, 'parts by mass' and 'mass%' have the same meanings as those of 'parts by weight' and 'wt%' respectively.

In the explanation below, a combination of preferred embodiments is a more preferred embodiment.

Conventionally, in the field of patterned tiles, etc., tiles having an enhanced design are known in which various image layers are formed by forming an image layer using a ceramic pigment and a glaze and sintering this at high temperature. However, there are the problems that due to the narrow color gamut of ceramic pigments the design is limited and due to sintering at high temperature being required the production cost is high.

On the other hand, the present inventors have found that when an organic resin layer formed from a UV-cured resin is used as a protective layer, the problem that scratch resistance is inadequate occurs.

As a result of an intensive investigation by the present inventors, it has been found that by comprising, in sequence above a substrate layer, an image layer having a colored pigment and a protective layer formed by a condensation reaction of an organosilicon compound, a multilayer structure can be obtained that, while suppressing the production cost, has performance characteristics with respect to tiles such as for example surface hardness and excellent impact resistance and durability (surface hardness and impact resistance being unimpaired for a long period of time and there being no discoloration), and the present invention has thus been accomplished.

Although the mechanism of action is not certain, it is surmised to be as follows. In a conventional method using a glaze such as that described in Patent Document 1, it is necessary to carry out sintering at a temperature that is at least the melting point of the glass frit (glaze), and since heating at high temperature is required, it is difficult to use a conventional inkjet ink, etc. On the other hand, when a protective layer formed by a condensation reaction of an organosilicon compound is provided, such heating at high temperature is not required, and the degree of freedom for materials forming the image layer is greatly increased. It is also possible to provide a multilayer structure that enables a design to be obtained having higher coloration and a wider color gamut than those of a multilayer structure using a ceramic pigment.

It has also been found that when the image layer is a layer formed from a polymer produced by a radical polymerization reaction and at the same time the image layer is a layer formed from a polymer produced by copolymerization of a silane coupling group-containing (meth)acrylate compound and/or a phosphoric acid ester group-containing (meth)acrylate compound, adhesion between the image layer and the protective layer is further improved. It is surmised that a reaction or affinity between the silane coupling group and/or phosphoric acid ester group in the composition forming the image layer and the organosilicon compound forming the protective layer contributes to an improvement in the adhesion between the two layers.

It has also been found that the adhesion between the image layer and the protective layer is further improved when the image layer is a layer formed from a polymer produced by a radical polymerization reaction and at the same time the organosilicon compound of the protective layer contains an acrylate-modified polysiloxane compound and/or an acrylate-modified silane coupling agent. It is surmised that this is due to a reaction between the radically polymerizable group of the radically polymerizable compound forming the image layer and the acrylate group of the acrylate-modified polysiloxane compound and/or acrylate-modified silane coupling agent.

Each layer is explained below.

### (Layer 1) Substrate layer

The multilayer structure of the present invention has (Layer 1) a substrate layer. The substrate layer is preferably an inorganic substrate. From the viewpoint of enhancing the heat resistance and durability of the multilayer structure, Layer 1 is preferably glass or ceramic, and particularly preferably a glass or ceramic tile.

### (Layer 2) Image layer containing colored pigment

The multilayer structure of the present invention has (Layer 2) an image layer containing a colored pigment.

The image layer is a layer containing at least one type of colored pigment. The image layer may be provided on the entire face (whole region) of the substrate layer or may be provided on only a partial region where decoration is required, and there are no particular limitations.

The image layer is a layer printed by an inkjet printing method or a screen printing method, and from the viewpoint of the design of the image being freely changed is particularly preferably a layer printed by an inkjet printing method. That is, the image layer is preferably a layer formed by curing an inkjet ink.

A composition for forming an image layer (hereinafter, also called 'the ink composition of the present invention') is not particularly limited as long as it comprises at least one type of colored pigment, and a UV-curable ink, which are generally and widely used. From the viewpoint of suppressing spreading of an image on a glass or ceramic tile, a UV-curable ink composition is used.

The ink composition of the present invention comprises a colored pigment, a radically polymerizable compound, and a radical polymerization initiator, and the image layer is a layer formed from a polymer produced by a polymerization reaction, that is, a cured layer formed by polymerization of the radically polymerizable compound contained in the UV-curable ink composition.

The ink composition of the present invention is preferably an oil-based ink composition that can be cured by UV. Furthermore, the ink composition of the present invention is preferably a non-solvent type ink composition that does not contain a volatile organic solvent, the content of solvent including water being preferably no greater than 5 mass%, more preferably no greater than 3 mass%, yet more preferably no greater than 1 mass%, and particularly preferably zero. However, the presence of a trace amount of moisture, etc. in the ink composition due to impurities or the environment is not excluded.

### <Colored pigment>

Examples of the colored pigment contained in the ink composition of the present invention include an organic pigment, an inorganic pigment, and a ceramic pigment. In particular, since an organic pigment has relatively low specific gravity, the storage stability of the ink composition is excellent, a wide color gamut can be obtained, and it is therefore suitably used. With regard to a white or black ink composition, an inorganic pigment may also be used preferably.

That is, an inkjet ink that is particularly preferably used when forming an image layer is a UV-curable ink containing an organic pigment.

As the colored pigment, an organic pigment, an inorganic pigment, etc. that are usually used may be used. Any commercially available pigment may usually be used, and a pigment that has been subjected to treatment with a commercially available pigment dispersion or surface treatment agent may also be used as long as the effects of the present invention are not impaired.

Examples of these pigments include pigments described in 'Ganryo no Jiten' (Dictionary of Pigments) Ed. by Seijirou Ito (2000), W. Herbst and K. Hunger 'Industrial Organic Pigments', JP-A-2002-12607(JP-A denotes a Japanese unexamined patent application publication), JP-A-2002-188025, JP-A-2003-26978, and JP-A-2003-342503.

With respect to specific examples of the pigment that can be used in the present invention, those exhibiting a yellow color include a monoazo pigment such as C.I. Pigment Yellow 1 (fast yellow G, etc.) or C.I. Pigment Yellow 74, a disazo pigment such as C.I. Pigment Yellow 12 (disazo yellow, etc.), C.I. Pigment Yellow 17, C.I. Pigment Yellow 97, C.I. Pigment Yellow 3, C.I. Pigment Yellow 16, C.I. Pigment Yellow 83, C.I. Pigment Yellow 155, or C.I. Pigment Yellow 219, a nonbenzidine-based azo pigment such as C.I. Pigment Yellow 180, an azo lake pigment such as C.I. Pigment Yellow 100 (tartrazine yellow lake, etc.), a condensed azo pigment such as C.I. Pigment Yellow 95 (condensed azo yellow GR, etc.), C.I. Pigment Yellow 93, C.I. Pigment Yellow 94, C.I. Pigment Yellow 128, or C.I. Pigment Yellow 166, an acidic dye lake pigment such as C.I. Pigment Yellow 115 (quinoline yellow lake, etc.), a basic dye lake pigment such as C.I. Pigment Yellow 18 (thioflavin lake, etc.), an anthraquinone-based pigment such as C.I. Pigment Yellow 24 (flavanthrone yellow), an isoindolinone pigment such as isoindolinone yellow 3RLT (Y-110), a quinophthalone pigment such as C.I. Pigment Yellow 138(quinophthalone yellow), an isoindoline pigment such as C.I. Pigment Yellow 139 (isoindoline yellow), a nitroso pigment such as C.I. Pigment Yellow 153 (nickel nitroso yellow, etc.), and a metal complex salt azomethine pigment such as C.I. Pigment Yellow 117 (copper azomethine yellow, etc.), an acetron-based pigment such as C.I. Pigment Yellow 120 (benzimidazolone yellow), C.I. Pigment Yellow 151, C.I. Pigment Yellow 154, C.I. Pigment Yellow 175, C.I. Pigment Yellow 180, C.I. Pigment Yellow 181, C.I. Pigment Yellow 194, an nickel azo-based pigment such as C.I. Pigment Yellow 150. Among them, C.I. Pigment Yellow 74, C.I. Pigment Yellow 120, C.I. Pigment Yellow 150, C.I. Pigment Yellow 154, C.I. Pigment Yellow 155, or C.I. Pigment Yellow 180, are preferably used.

Examples of a pigment exhibiting a red or magenta color include a monoazo pigments such as C.I. Pigment Red 3 (Toluidine Red, etc.), β-naphthol pigments such as C.I. Pigment Red 1, C.I. Pigment Red 4, or C.I. Pigment Red 6, a disazo pigments such as C.I. Pigment Red 38 (Pyrazolone Red B, etc.), an azo lake pigments such as C.I. Pigment Red 53:1 (Lake Red C, etc.), C.I. Pigment Red 57:1 (Brilliant Carmine 6B, etc.), C.I. Pigment Red 52:1, or C.I. Pigment Red 48 (B-oxynaphthenic acid lake, etc.), a condensed azo pigments such as C.I. Pigment Red 144 (Azo Condensation Red, etc.), C.I. Pigment Red 166, C.I. Pigment Red 220, C.I. Pigment Red 214, C.I. Pigment Red 221, or C.I. Pigment Red 242, acidic dye lake pigments such as C.I. Pigment Red 174 (Phloxine B Lake, etc.) or C.I. Pigment Red 172 (Erythrosine Lake, etc.), a basic dye lake pigments such as C.I. Pigment Red 81 (Rhodamine 6G' Lake, etc.), an anthraquinone pigments such as C.I. Pigment Red 177 (Dianthraquinonyl Red, etc.), a thioindigo pigments such as C.I. Pigment Red 88 (Thioindigo Bordeaux, etc.), a perinone pigments such as C.I. Pigment Red 194 (Perinone Red, etc.), a perylene pigments such as C.I. Pigment Red 149 (Perylene Scarlet, etc.), C.I. Pigment Red 179, C.I. Pigment Red 178, C.I. Pigment Red 190, C.I. Pigment Red 224, C.I. Pigment Red 123 or C.I. Pigment Red 224, a quinacridone pigments such as C.I. Pigment Violet 19 (unsubstituted quinacridone), C.I. Pigment Red 122 (Quinacridone Magenta, etc.), C.I. Pigment Red 262, C.I. Pigment Red 207, or C.I. Pigment Red 209, an isoindolinone pigments such as C.I. Pigment Red 180 (Isoindolinone Red 2BLT, etc.), an alizarin lake pigments such as C.I. Pigment Red 83 (Madder Lake, etc.), a naphthlone pigments such as C.I. Pigment Red 171, C.I. Pigment Red 175, C.I. Pigment Red 176, C.I. Pigment Red 185, or C.I. Pigment Red 208, naphthol an AS type pigments such as C.I. Pigment Red 247, a naphthol AS pigments such as C.I. Pigment Red 2, C.I. Pigment Red 5, C.I. Pigment Red 21, C.I. Pigment Red 170, C.I. Pigment Red 187, C.I. Pigment Red 256, C.I. Pigment Red 268, or C.I. Pigment Red 269, or a diketopyrrolopyrrole pigments such as C.I. Pigment Red 254, C.I. Pigment Red 255, C.I. Pigment Red 264, or C.I. Pigment Red 27. Among them, a quinacridone pigments such as C.I. Pigment Violet 19 (unsubstituted quinacridone), C.I. Pigment Red 122 (Quinacridone Magenta, etc.), C.I. Pigment Red 262, C.I. Pigment Red 207, or C.I. Pigment Red 209, and a quinacridone pigment that is a solid solution of two or more these quinacridone pigments is preferably used.

Examples of the pigment exhibiting a blue or cyan color include a disazo pigment such as C.I. Pigment Blue 25 (Dianisidine Blue, etc.), a phthalocyanine pigments such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6, or C.I. Pigment Blue 16 (Phthalocyanine Blue, etc.), an acidic dye lake pigments such as C.I. Pigment Blue 24 (Peacock Blue Lake, etc.), a basic dye lake pigments such as C.I. Pigment Blue 1 (Victoria Pure Blue BO Lake, etc.), an anthraquinone pigments such as C.I. Pigment Blue 60 (Indanthrone Blue, etc.), and an alkali blue pigments such as C.I. Pigment Blue 18 (Alkali Blue V-5:1). Among them, a phthalocyanine pigment such as C.I. Pigment Blue 15, C.I. Pigment Blue 15:1, C.I. Pigment Blue 15:2, C.I. Pigment Blue 15:3, C.I. Pigment Blue 15:4, C.I. Pigment Blue 15:6 .etc, is preferably used.

Examples of the pigment exhibiting a green color include a phthalocyanine pigments such as C.I. Pigment Green 7 (phthalocyanine green) or C.I. Pigment Green 36 (phthalocyanine green) and azo metal complex pigments such as C.I. Pigment Green 8 (nitroso green) and C.I. Pigment Green 10.

Examples of the pigment exhibiting an orange color include an isoindoline-based pigment such as C.I. Pigment Orange 66 (isoindoline orange), anthraquinone-based pigments such as C.I. Pigment Orange 51 (dichloropyranthrone orange), β-naphthol pigments such as C.I. Pigment Orange 2, C.I. Pigment Orange 3, and C.I. Pigment Orange 5, naphthol AS pigments such as C.I. Pigment Orange 4, C.I. Pigment Orange 22, C.I. Pigment Orange 24, C.I. Pigment Orange 38, and C.I. Pigment Orange 74, isoindolinone pigments such as C.I. Pigment Orange 61, perinone pigments such as C.I. Pigment Orange 43, disazo pigments such as C.I. Pigment Orange 15 and C.I. Pigment Orange 16, quinacridone pigments such as C.I. Pigment Orange 48 and C.I. Pigment Orange 49, an acetolone pigment such as C.I. Pigment Orange 36, C.I. Pigment Orange 62, C.I. Pigment Orange 60, C.I. Pigment Orange 64, and C.I. Pigment Orange 72, and pyrazolone pigments such as C.I. Pigment Orange 13 and C.I. Pigment Orange 34.

Examples of the pigment exhibiting a brown color include a naphtholone pigment such as C.I. Pigment Brown 25 and C.I. Pigment Brown 32.

Examples of the pigment exhibiting a black color include C.I. Pigment Black 7 (carbon black), titanium black, an indazine pigment such as C.I. Pigment Black 1 (aniline black), and a perylene pigment such as C.I. Pigment Black 31 or C.I. Pigment Black 32. Among them, C.I. Pigment Black 7 is preferably used.

Examples of the white pigment include basic lead carbonate (2PbCO₃Pb(OH)₂, also known as silver white), zinc oxide (ZnO, also known as zinc white), titanium oxide (TiO₂, also known as titanium white),and strontium titanate (SrTiO₃, also known as titanium strontium white), among them, titanium oxide is preferably used.

Inorganic particles that are used as a white pigment may be a single substance or composite particles with an oxide of silicon, aluminum, zirconium, titanium, etc., an organic metal compound, or an organic compound.

Among them, the titanium oxide is suitably used since, compared with other white pigments, it has low specific gravity, a large refractive index, a physical and chemical stability, high hiding power and coloring power as a pigment, and excellent durability toward acid, alkali, and other environments. Therefore, it is preferable to use titanium oxide as a white pigment. Of course, another white pigment (which may be a white pigment other than those listed) may be used as necessary.

With respect to a pigment other than white color, the smaller the average particle size, the better the coloring properties, and therefore when the pigment dispersion is applied to a pigment dispersion other than white, it is preferably on the order of 0.01 to 0.4 µm, and more preferably 0.02 to 0.3 µm.

The maximum particle size of a pigment is preferably no more than 3 µm, and more preferably no more than 1 µm. The particle size of the pigment may be adjusted by selection of the pigment, the dispersant and dispersion medium, setting of dispersing conditions and filtration conditions, etc. When the ink composition of the present invention is prepared as the non-white ink composition, the average particle size of a pigment used in the non-white ink composition is preferably on the order of 0.05 to 1.0 µm from the viewpoint of a sufficient hiding power being given, and more preferably on the order of 0.1 to 0.4 µm. As the white pigment dispersion, the maximum particle size of the pigment is also preferably no more than 3 µm, and more preferably no more than1 µm.

### <Dispersant>

When preparing pigment particles, pigment dispersant may be used as necessary. Examples of the dispersant used in the present invention include activators and salts thereof such as a higher fatty acid salt, an alkyl sulfate, an alkyl ester sulfate, an alkyl sulfonate, a sulfosuccinate, a naphthalenesulfonate, an alkyl phosphate, a polyoxyalkylene alkyl ether phosphate, a polyoxyalkylene alkylphenyl ether, a polyoxyethylene polyoxypropylene glycol, a glycerol ester, a sorbitan ester, a polyoxyethylene fatty acid amide, and an amine oxide, a block copolymer or a random copolymer consisting of two or more different monomers selected from the group consisting of styrene, a styrene derivative, a vinyl naphthalene derivative, acrylic acid, an acrylic acid derivative, maleic acid, a maleic acid derivative, itaconic acid, an itaconic acid derivative, fumaric acid, a fumaric acid derivative, or a salt thereof.

In addition, the self-dispersing pigment can be used in the ink composition of the present invention. The self-dispersing pigment described in the present invention refers to a pigment that can disperse without a dispersant, and is particularly preferably pigment particles having a polar group on the surface thereof.

In the present invention, the pigment particles having a polar group on the surface thereof refer to pigment particles of which the surface is directly modified with a polar group, or an organic substance that has an organic pigment core and is bonded to a polar group directly or via a linkage (hereinafter, called a pigment derivative).

Examples of the polar group include a sulfonic acid group, a carboxylic acid group, a phosphoric acid group, a boric acid group, and a hydroxyl group. Among these, a sulfonic acid group and a carboxylic acid group are preferable, and a sulfonic acid group is more preferable.

As a method of obtaining such pigment particles having a polar group on the surface thereof, the method of oxidizing the surface of pigment particles by using an appropriate oxidant so as to introduce a polar group such as a sulfonic acid group or a salt thereof into at least a portion of the pigment surface, which is described in WO97/48769A, JP-A-10-110129, JP-A-11-1999-246807, JP-A-11-57458, JP-A-11-189739A, JP-A-11-323232, JP-A-11-265094A, and the like, is exemplified. Specifically, the pigment particles can be prepared by oxidizing the carbon black with concentrated nitric acid or, in a case of color pigments, by oxidizing with sulfamic acid, sulfonated pyridine salt, amidosulfuric acid, or the like in sulfolane or N-methyl-2-pyrrolidone. Through these reactions, components which become water-soluble due to the oxidation having proceeded too far are removed and purified, thereby obtaining a pigment dispersion. In addition, when a sulfonic acid group is introduced to the surface by oxidation, the acidic group may be neutralized using a basic compound If necessary.

As another method of obtaining the pigment particles having a polar group on the surface thereof, the method of causing a pigment derivative to be adsorbed onto the surface of pigment particles by treatment such as milling, which is described in JP-A-11-49974, JP-A-2000-273383, and JP-A-2000-303014, and the method of dissolving a pigment along with a pigment derivative in a solvent and then crystallizing the resultant in a poor solvent, which is described in JP-A-2002-179977, JP-A-2002-201401 and the like, are exemplified. The pigment particles having a polar group on the surface thereof can be easily obtained by either of these methods.

The polar group in the pigment surface may be in a free state or a salt state, or may have a counter salt. Examples of the counter salt include inorganic salts (lithium, sodium, potassium, magnesium, calcium, aluminum, nickel, and ammonium) and organic salts (triethyl ammonium, diethyl ammonium, pyridinium, triethanol ammonium, and the like). Among these, monovalent counter salts are preferable.

In the present invention, the content of the pigment with respect to the total amount of the ink composition is preferably 0.5% to 10mass %, and is more preferably 0.5% to 5mass %.

When the content is within this range, an image having high image quality can be obtained.

### <Polymerizable compound>

The ink composition of the present invention comprises a radical polymerizable compound having a radically polymerizable ethylenically unsaturated bond. Examples thereof include those having a chemical configuration such as a monomer, an oligomer or a polymer. One type of radically polymerizable compound may be used, or two or more types thereof may be used in combination at any ratio in order to improve an intended property.

From the viewpoint of enhancing adhesion to the protective layer, the ink composition for forming the image layer comprises a (meth)acryloyl group-containing silane coupling agent and/or a phosphoric acid ester group-containing (meth)acrylate compound, and more preferably comprises a (meth)acryloyl group-containing silane coupling agent or a phosphoric acid ester group-containing (meth)acrylate compound. With regard to the (meth)acryloyl group-containing silane coupling agent and the phosphoric acid ester group-containing (meth)acrylate compound, they may be used on their own or two or more types may be used in combination.

Each thereof is explained below.

### [(Meth)acryloyl group-containing silane coupling agent]

The (meth)acryloyl group-containing silane coupling agent is a compound having in the molecule a (meth)acryloyl group and a reactive silyl group (hydrolysable silyl group and/or silanol group) such as an alkoxysilyl group.

The hydrolysable silyl group or the silanol group is preferably one represented by Formula (1) below.

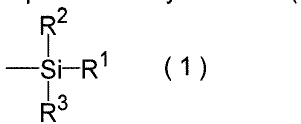

In Formula (1), at least one of R¹ to R³ denotes a hydroxy group or a hydrolysable group selected from the group consisting of an alkoxy group, a mercapto group, a halogen atom, an amide group, an acetoxy group, an amino group, and an isopropenoxy group. The remaining R¹ to R³ independently denote a hydrogen atom, a halogen atom, or a monovalent organic substituent (e.g. an alkyl group, an aryl group, an alkenyl group, an alkynyl group, or an aralkyl group).

In Formula (1) above, the hydrolysable group bonded to the silicon atom is preferably an alkoxy group or a halogen atom, and more preferably an alkoxy group.

Specific examples of the (meth)acryloyl group-containing silane coupling agent include γ-methacryloxypropylmethyldimethoxysilane, γ-methacryloxypropyltrimethoxysilane, γ-methacryloxypropylmethyldiethoxysilane, γ-methacryloxypropyltriethoxysilane, γ-acryloxypropyltrimethoxysilane.

The (meth)acryloyl group-containing silane coupling agent is also available as a commercial product, and examples thereof include KBM-502, KBM-503, KBE-502, KBE-503, KBM-5103 etc. (Shin-Etsu Chemical Co., Ltd.).

The content of the (meth)acryloyl group-containing silane coupling agent in the ink composition of the present invention is preferably 0.5 to 20 mass % of the entire solid content and more preferably 1 to 10 mass %. It is preferable for the content of the (meth)acryloyl group-containing silane coupling agent to be within these ranges since improved adhesion effects with a protecting layer are obtained.

### (Phosphoric acid ester group-containing (meth)acrylate compound)

Examples of the phosphoric acid ester group-containing (meth)acrylate compound include a compound having in the molecule a (meth)acryloyl group and a phosphoric acid ester group. Preferred examples include a compound represented by Formula (2) below.

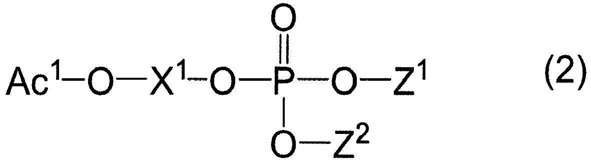

In Formula (2), Z¹ denotes Ac²-O-X²- , a hydrogen atom, or a substituent having no polymerizable group, Z² denotes Ac³-O-X³-, a hydrogen atom, or a substituent having no polymerizable group, Ac¹, Ac², and Ac³ mutually independently denote an acryloyl group or a methacryloyl group, and X¹, X², and X³ mutually independently denote an alkylene group or a divalent group formed by combining an alkylene group and at least one selected from the group consisting of an alkyleneoxy group, an alkyleneoxycarbonyl group, and an alkylenecarbonyloxy group.

Formula (2) includes a monofunctional monomer represented by Formula (3) below, a difunctional monomer represented by Formula (4) below, and a trifunctional monomer represented by Formula (5) below.

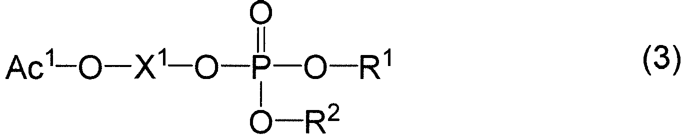

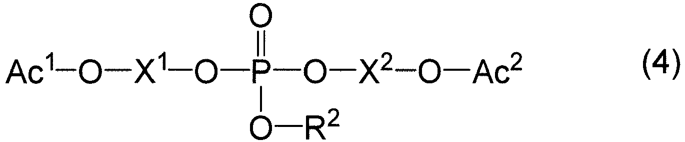

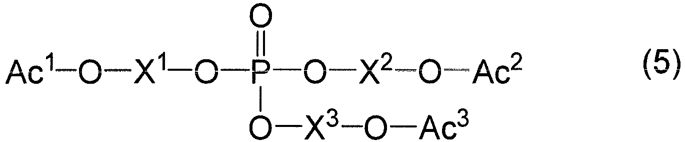

The definitions of Ac¹, Ac², Ac³, X¹, X², and X³ are the same as in Formula (2). In Formulae (3) and (4), R¹ denotes a hydrogen atom or a substituent that does not have a polymerizable group, and R² denotes a hydrogen atom or a substituent that does not have a polymerizable group.

In Formulae (2) to (5), the number of carbons of X¹, X², and X³ is preferably 1 to 12, more preferably 1 to 6, and yet more preferably 1 to 4. Specific examples of the alkylene group denoted by X¹, X², and X³ and specific examples of the alkylene moiety of the alkyleneoxy group, alkyleneoxycarbonyl group, and alkylenecarbonyloxy group denoted by X¹, X², and X³ include a methylene group, an ethylene group, a propylene group, a butylene group, a pentylene group, and a hexylene group. The alkylene group may be straight-chain or branched, but a straight-chain alkylene group is preferable. X¹, X², and X³ are preferably alkylene groups.

The divalent group formed by combining an alkylene group and at least one selected from the group consisting of an alkyleneoxy group, an alkyleneoxycarbonyl group, and an alkylenecarbonyloxy group means an alkyleneoxyalkylene group, an alkyleneoxycarbonylalkylene group, an alkylenecarbonyloxyalkylene group, or a combination thereof. That is, it denotes a divalent group in which a carbon atom, other than a terminal one, of an alkylene group is replaced by an ether bond and/or an ester bond (-C(= O)-O- or -O-C(= O)-).

The alkylene group may have a substituent, and examples of the substituent include a halogen atom.

In Formulae (2) to (5), examples of the substituent that does not have a polymerizable group include an alkyl group, an aryl group, or a group formed by combining same. An alkyl group is preferable.

The number of carbons of the alkyl group is preferably 1 to 12, more preferably 1 to 9, and yet more preferably 1 to 6. Specific examples of the alkyl group include a methyl group, an ethyl group, a propyl group, a butyl group, a pentyl group, and a hexyl group. The alkyl group may be straight-chain, branched, or cyclic, but is preferably a straight-chain alkyl group. The alkyl group may be substituted with an alkoxy group, an aryl group, an aryloxy group, etc.

The number of carbons of the aryl group is preferably 6 to 14, and more preferably 6 to 10. Specific examples of the aryl group include a phenyl group, a 1-naphthyl group, and a 2-naphthyl group. The aryl group may be substituted with an alkyl group, an alkoxy group, an aryloxy group, etc.

In the present invention, with regard to the monomer represented by Formula (2), only one type may be used or two or more types may be used in combination. When they are used in combination, two or more types selected from a monofunctional monomer represented by Formula (3), a difunctional monomer represented by Formula (4), and a trifunctional monomer represented by Formula (5) may be used in combination.

In the present invention, the phosphoric acid ester group-containing (meth)acrylate compound may be a commercially available compound, such as the KAYAMER series manufactured by Nippon Kayaku Co., Ltd. or the Phosmer series manufactured by Uni-Chemical Co., Ltd., or may be a newly synthesized compound.

The content of the phosphoric acid ester group-containing (meth)acrylate compound in the ink composition of the present invention is preferably 0.5 to 20 mass % of the entire solid content and more preferably 1 to 10 mass %. It is preferable for the content of the phosphoric acid ester group-containing (meth)acrylate compound to be within these ranges since improved adhesion effects with a protecting layer are obtained.

In the ink composition of the present invention, the total content of the radically polymerizable compound is preferably 30 to 98 mass% relative to the total mass of the ink composition, more preferably 40 to 95 mass%, and yet more preferably 50 to 90 mass%.

It is preferable for the content of the radically polymerizable compound to be within this range since the curability is excellent, the viscosity is appropriate, and a good image is obtained.

### <Polymerization initiator>

The ink composition of the present invention preferably comprises a polymerization initiator, and more preferably comprises a radically polymerization initiator.

As a polymerization initiator that can be used in the present invention, a known polymerization initiator may be used. The polymerization initiator that can be used in the present invention may be used singly or in a combination of two or more types.

The polymerization initiator that can be used in the present invention is a compound that forms a polymerization initiating species by absorbing external energy. The external energy used for initiating polymerization can be broadly divided into heat and actinic radiation, a thermal polymerization initiator and a photopolymerization initiator are used respectively, and a photopolymerization initiator are preferably used. Examples of the actinic radiation include γ rays, β rays, an electron beam, ultraviolet rays, visible light, and infrared rays, and preferred examples include ultraviolet rays.

As a radical polymerization initiator that can be used in the present invention, a known radical polymerization initiator may be used.

Examples of the radical polymerization initiator that can be used in the present invention include (a) an aromatic ketone, (b) an acylphosphine compound, (c) an aromatic onium salt compound, (d) an organic peroxide, (e) a thio compound, (f) a hexaarylbiimidazole compound, (g) a ketoxime ester compound, (h) a borate compound, (i) an azinium compound, (j) a metallocene compound, (k) an active ester compound, (l) a compound having a carbon-halogen bond, and (m) an alkylamine compound. With regard to these radical polymerization initiators, the above-mentioned compounds (a) to (m) may be used singly or in combination.

Among them, (a) an aromatic ketone, (b) an acylphosphine compound and (e) a thio compound are preferably used.

The polymerization initiator in the present invention includes not only a compound that generates a polymerization initiating species by absorbing external energy such as actinic radiation but also a compound that promotes decomposition of a polymerization initiator by absorbing specific actinic radiation (a so-called sensitizer).
(a) an aromatic ketone compound is preferably an α-hydroxyketone compound and/or an α-aminoketone compound.
   Examples of the α-hydroxyketone compound include 1-[4-(2-hydroxyethoxy)phenyl]-2-hydroxy-2-methyl-1-propan-1-one, 2-hydroxy-2-methyl-1-phenylpropan-1-one, and 1-hydroxycyclohexyl phenyl ketone compound.
   Examples of the α-aminoketone compound include 2-methyl-1-phenyl-2-morpholinopropan-1-one, 2-methyl-1-[4-(hexyl)phenyl]-2-morpholinopropan-1-one, 2-ethyl-2-dimethylamino-1-(4-morpholinophenyl)butan-1-one.
(b) As an acylphosphine compound, an acylphosphine oxide compound is preferable.

Preferred examples of the acylphosphine oxide compound include a monoacylphosphine oxide compound or a bisacylphosphine oxide compound, etc.

As monoacylphosphine oxide compounds, a known monoacylphosphine oxide compound may be used.

For example, monoacylphosphine oxide compounds described in JP-B-60-8047 and JP-B-63-40799 (JP-B denotes a Japanese examined patent application publication) may be used,

As bisacylphosphine oxide compounds, a known bisnoacylphosphine oxide compound may be used.

Examples of bisacylphosphine oxide compounds are described in JP-A-3-101686, JP-A-5-345790 and JP-A-6-298818.

Preferred examples of the a thio compound (e) include a compound having a benzophenone skeleton or a compound having a thioxanthone skeleton (thioxanthone compound) described in 'RADIATION CURING IN POLYMER SCIENCE AND TECHNOLOGY' J. P. FOUASSIER J. F. RABEK (1993), pp. 77 to 117, a thioxanthone described in JP-B-63-61950, and a coumarin described in JP-B-59-42864.

The ink composition of the present invention preferably comprises as polymerization initiator at least one compound selected from the group consisting of an aromatic ketone compound, acylphosphine oxide compound, bis-acylphosphine oxide compound and thioxanthone compound, more preferably bis-acylphosphine oxide compound and/or thioxanthone compound and yet more preferably bis-acylphosphine oxide compound and thioxanthone compound.

In accordance with the above-mentioned combination, an ink composition having excellent curability is obtained.

The content of the polymerization initiator in the ink composition, relative to the total mass of the ink composition of the present invention, is preferably 0.1 to 20.0 mass %, more preferably 0.5 to 18.0 mass %, and yet more preferably 1.0 to 15.0 mass %. When the amount of polymerization initiator added is in the above-mentioned range, the curability is excellent and it is appropriate from the viewpoint of suppression of surface tackiness.

Furthermore, with regard to the content ratio (ratio by mass) of the polymerization initiator to the polymerizable compound, it is preferable that polymerization initiator: polymerizable compound = 0.5:100 to 30:100, more preferably 1:100 to 15:100, and yet more preferably 2:100 to 10:100.

### <Sensitizer>

The ink composition of the present invention preferably comprises a sensitizer to promote decomposition of a polymerization initiator by absorbing specific actinic radiation.

Examples of the sensitizer include a polynuclear aromatic compound (e.g. pyrene, perylene, triphenylene, 2-ethyl-9,10-dimethoxyanthracene, etc.), a xanthene (e.g. fluorescein, eosin, erythrosine, Rhodamine B, Rose Bengal, etc.), a cyanine (e.g. thiacarbocyanine, oxacarbocyanine, etc.), a merocyanine (e.g. merocyanine, carbomerocyanine, etc.), a thiazine (e.g. thionine, methylene blue, toluidine blue, etc.), an acridine (e.g. acridine orange, chloroflavine, acriflavine, etc.), an anthraquinone (e.g. anthraquinone, etc.), a squarium (e.g. squarium, etc.), and a coumarin (e.g. 7-diethylamino-4-methylcoumarin, etc.).

From the viewpoint of the coloring properties of the ink, the content of the sensitizer used in the ink composition of the present invention is preferably 0.01 to 20 mass % relative to the entire solids content of the ink composition, more preferably 0.1 to 15 mass %, and yet more preferably 0.5 to 10 mass %.

The sensitizer may be used singly or in a combination of two or more types.

Furthermore, from the viewpoint of improvement of decomposition efficiency of the polymerization initiator and transparency to irradiating light, the ratio of the polymerization initiator to the sensitizer contained in the ink composition is preferably polymerization initiator/sensitizer = 100 to 0.05 as a ratio by mass, more preferably polymerization initiator/sensitizer = 50 to 0.1, and yet more preferably polymerization initiator/sensitizer = 10 to 0.5.

### <Other components>

The ink composition of the present invention may, as necessary, comprise a surfactant, a co-sensitizer, a UV absorber, an antioxidant, an antifading agent, a conductive salt, a solvent, a polymer compound, a basic compound, etc. in addition to the above components. They are described in JP-A-2009-221416 and may also be used in the present invention. Needless to say, the total of the contents of each of the components contained in the ink composition of the present invention does not exceed 100 mass%.

Furthermore, from the viewpoint of storage properties and suppression of head clogging, the ink composition of the present invention preferably comprises a polymerization inhibitor.

The polymerization inhibitor is preferably added at 200 to 20,000 ppm relative to the total amount of the ink composition of the present invention.

Examples of the polymerization inhibitor include a nitroso-based polymerization inhibitor, a hindered amine-based polymerization inhibitor, hydroquinone, benzoquinone, *p*-methoxyphenol, TEMPO (2,2,6,6-Tetramethylpiperidine 1-Oxyl), TEMPOL (4-Hydroxy-2,2,6,6-tetramethylpiperidine 1-Oxyl), and AI cupferron.

### <Ink properties>

Furthermore, the ink composition of the present invention is preferably a liquid at room temperature (25°C).

While taking into consideration dischargeability, the ink composition of the present invention has a viscosity at 25°C of preferably no more than 40 mPa·s, more preferably 5 to 40 mPa·s, and yet more preferably 7 to 30 mPa·s, in particular when forming an image layer by inkjet printing. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the ink composition of the present invention, it is preferable that its component ratio is appropriately adjusted so that the viscosity at 25°C and at the discharge temperature are in the above-mentioned range. When the viscosity at room temperature is set to be high, penetration of the ink composition of the present invention into the substrate layer can be prevented, and uncured monomer can be reduced. Furthermore, ink spreading when droplets of the ink composition have landed can be suppressed, and as a result there is the advantage that the image quality is improved.

The surface tension of the ink composition of the present invention at 25°C is preferably 20 to 35 mN/m, and particularly preferably 23 to 33 mN/m. From the viewpoint of spreading and penetration, the surface tension is preferably at least 20 mN/m, and from the viewpoint of wettability it is preferably no greater than 35 mN/m.

### (Layer 3) Protective layer formed by condensation reaction of organosilicon compound

The multilayer structure of the present invention comprises a protective layer formed by a condensation reaction of an organosilicon compound. The protective layer is preferably provided in the same region as an image region of the image layer provided on the substrate layer or in a region, including the image region, that is wider than the image, and more preferably in a region, including the image region, that is wider than the image, as one layer of a solid layer including the image region.

In the explanation below, a composition for forming the protective layer is also called an overcoat composition or the overcoat composition of the present invention. The overcoat composition of the present invention comprises at least an organosilicon compound.

The protective layer is preferably a layer printed by any method from an inkjet printing method, a screen printing method, and a spray printing method.

From the viewpoint of obtaining excellent heat resistance or scratch resistance, the layer formed by a condensation reaction of an organosilicon compound of Layer 3 preferably comprises a polysiloxane produced by a condensation reaction of an organosilicon compound containing at least a siloxane oligomer.

From the viewpoint of obtaining excellent heat resistance or scratch resistance, when producing the protective layer, the overcoat composition preferably comprises at least a siloxane oligomer. That is, the protective layer is preferably a layer formed by a condensation reaction of an organosilicon compound containing at least a siloxane oligomer. From the viewpoint of excellent scratch resistance, cure rate, and transparency in particular, the siloxane oligomer is preferably a siloxane oligomer having a structure in which a molecular terminal is blocked by an alkoxysilyl group.

### <Siloxane oligomer>

The overcoat composition of the present invention comprises an organosilicon compound, and preferably comprises at least a siloxane oligomer as the organosilicon compound.

As the siloxane oligomer in the present invention, a partial hydrolysis-condensation product obtained using one type of silane compound or a partial cohydrolysis-condensation product obtained using two or more types of silane compounds may be used. These compounds are sometimes called a 'partial (co)hydrolysis-condensation product' below.

The silane compound referred to here is the hydrolysable silyl group- and/or silanol group-containing compound; the silyl group is hydrolyzed to become a silanol group, and the silanol group undergoes dehydration-condensation to form a siloxane bond.

Specific examples of such a partial (co)hydrolysis-condensation product include a partial (co)hydrolysis condensaste obtained by using, as a precursor, one or more selected from the group of silane compounds consisting of alkoxysilanes or acetyloxysilanes such as tetramethoxysilane, tetraethoxysilane, methyltrimethoxysilane, methyltriethoxysilane, methyltriisopropoxysilane, methyltriacethoxysilane, methyltris(methoxyethoxy)silane, methyltris(methoxypropoxy)silane, ethyltrimethoxysilane, propyltrimethoxysilane, butyl trimethoxysilane, hexyltrimethoxysilane, octyltrimethoxysilane, decyltrimethoxysilane, cyclohexyltrimethoxysilane, phenyltrimethoxysilane, phenyltriethoxysilane, tolyltrimethoxysilane, chloromethyltrimethoxysilane, γ-chloropropyltrimethoxysilane, 3,3,3-trifluoropropyltrimethoxysilane, cyanoethyltriethoxysilane, γ-glycidoxypropyltrimethoxysilane, γ-glycidoxypropyltriethoxysilane, β-(3,4-epoxycyclohexyl)ethyltrimethoxysilane, γ-aminopropyltrimethoxysilane, γ-aminopropyltriethoxysilane, *N*-β-(aminoethyl)-γ-aminopropyltrimethoxysilane, *N*-phenyl-γ-aminopropyltrimethoxysilane, γ-mercaptopropyltrimethoxysilane, dimethyldimethoxysilane, dimethyldiethoxysilane, diethyldimethoxysilane, methylethyldimethoxysilane, methylpropyldimethoxysilane, diphenyldimethoxysilane, diphenyldiethoxysilane, methylphenyldimethoxysilane, γ-chloropropylmethyldimethoxysilane, 3,3,3-trifluoropropylmethyldimethoxysilane, γ-glycidoxypropylmethyldiethoxysilane, γ-aminopropylmethyldiethoxysilane, *N*-β-(aminoethyl)-γ-aminopropylmethyldimethoxysilane and γ-mercaptopropylmethyldiethoxysilane, and an acyloxysilane such as ethoxalyloxysilane.

Among silane compounds as partial (co)hydrolysis-condensation product precursors, from the viewpoint of versatility, cost, and film compatibility, a silane compound having a substituent selected from a methyl group and a phenyl group as a substituent on the silicon is preferable. Specific preferred examples of the precursor include methyltrimethoxysilane, methyltriethoxysilane, phenyltrimethoxysilane, phenyltriethoxysilane, dimethyldimethoxysilane, dimethyldiethoxysilane, diphenyldimethoxysilane, and diphenyldiethoxysilane.

In this case, as a partial (co)hydrolysis-condensation product, it is preferable to use a dimer (2 moles of silane compound is reacted with 1 mole of water to eliminate 2 moles of alcohol, thus giving a disiloxane unit) of the silane compounds cited above to 100-mer of the above-mentioned silane compound, more preferably a dimer to 50-mer, and yet more preferably a dimer to 30-mer, and it is also possible to use a partial (co)hydrolysis-condensation product formed using two or more types of silane compounds as starting materials.

As such a partial (co)hydrolysis-condensation product, ones commercially available as silicone alkoxy oligomers may be used (e.g. those from Shin-Etsu Chemical Co., Ltd.) or ones that are produced in accordance with a standard method by reacting a hydrolyzable silane compound with less than an equivalent of hydrolytic water and then removing by-products such as alcohol and hydrochloric acid may be used. When the production employs, for example, an acyloxysilane or an alkoxysilane described above as a hydrolyzable silane compound starting material, which is a precursor, partial hydrolysis-condensation may be carried out using as a reaction catalyst an acid such as hydrochloric acid or sulfuric acid, an alkali metal or alkaline earth metal hydroxide such as sodium hydroxide or potassium hydroxide, or an alkaline organic material such as triethylamine, and when the production is carried out directly from a chlorosilane, water and alcohol may be reacted using hydrochloric acid by-product as a catalyst.

In the present invention, the siloxane oligomer preferably has at a molecular terminal an alkoxysilyl group. Examples of the siloxane oligomer having at a molecular terminal an alkoxysilyl group include an alkoxysilane compound represented by Formula (A-1) below or a partial hydrolysis-condensation product thereof. 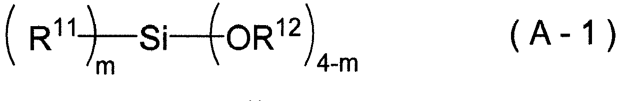 (In Formula (A-1), R¹¹ denotes a hydrogen atom or a substituted or unsubstituted monovalent hydrocarbon group, R¹² denotes an alkyl group, m denotes an integer 0 to 3, when m denotes no less than 2, the plurality of R¹¹ may be identical to or different from each other, and when m denotes no more than 2, the plurality of R¹² may be identical to or different from each other.)

In Formula (A-1), R¹¹ denotes a hydrogen atom or a substituted or unsubstituted monovalent hydrocarbon group, examples of the hydrocarbon group include alkyl group, cycloalkyl group, aryl group, aralkyl group. The alkyl group preferably has 1 to 24 carbons, more preferably 1 to 18 carbons, yet more preferably 1 to 12 carbons, particularly preferably 1 to 6 carbons.

Examples of the alkyl group include methyl group, ethyl group, propyl group, isopropyl group, butyl group, isobutyl group, *sec*-butyl group, *tert*-butyl group, pentyl group, isopentyl group, *sec*-pentyl group, hexyl group, heptyl group, n-octyl group, isooctyl group, 2-ethylhexyl group, nonyl group, decyl group, isodecyl group, isodecyl group, dodecyl group, tetradecyl group, hexadecyl group and octadecyl group.

Examples of the cycloalkyl group include cyclopropyl group, cyclobutyl group, cyclopentyl group, cyclohexyl group, cycloheptyl group, and cyclooctyl group.

The aryl group preferably has 6 to 12 carbons, more preferably 6 to 8 carbons. Examples of the aryl group include phenyl group, toryl group and xylyl group.

The aralkyl group preferably has 7 to 13 carbons, more preferably 7 to 9 carbons. Examples of the aryl group include benzyl group, 1-phenylethyl group, 2-phenylethyl group and o-, m-, or p-methylbenzyl group.

Examples of the R¹¹ include the substituted monovalent hydrocarbon group, and examples of the substituent include an alkyl group, an aryl group, a halogen atom (for example, chloride, fluorine, bromine and Iodine), a hydroxy group, a cyano group, an amino group, and a carboxy group.

The hydrocarbon group may have a plurality of substituent, when the hydrocarbon group has a plurality of substituent, they may be identical to or different from each other.

Preferably examples of R¹¹ include hydrogen atom, alkyl group having 1 to 18 carbons and aryl group having 6 to 8 carbons.

R¹² denotes an alkyl group, preferably an alkyl group having 1 to 8 carbons, more preferably an alkyl group having 1 to 4 carbons, yet more preferably an alkyl group having 1 or 2 carbons, that is, the alkyl group is methyl or ethyl group.

m denotes an integer of 0 to 3, preferably 1 or 2, yet more preferably 1. When there are a plurality of R¹¹ and/or R¹², they may be identical to or different from each other, and is not particularly limited.

Examples of alkoxy silane compounds represented by formula (A-2) include methyltrimethoxysilane, methyltriethoxysilane, methyltriisopropoxysilane, methyltributoxysilane, ethyltrimethoxysilane, propyltrimethoxysilane, dimethyldimethoxysilane, phenyltrimethoxysilane, diphenyldimethoxysilane, phenylmethyldimethoxysilane, tetramethoxysilane, tetraethoxysilane, tetraisopropoxysilane, tetrabutoxysilane and a mixture of thereof.

The siloxane oligomer is preferably the compound represented by formula (A-2) or the partial (co)hydrolysis-condensation product of the compound.

R²¹-Si(̵OR²²)₃ (A-2)

(In Formula (A-2), R²¹ denotes an alkyl group and R²² denotes an alkyl group having 1 to 4 carbons.)
R²¹ in Formula (A-2) above denotes an alkyl group, is preferably an alkyl group having 1 to 10 carbons, and may be any of straight-chain, branched, and cyclic. A hydrogen atom may be replaced by another element such as for example fluorine.

R²² denotes a straight-chain or branched alkyl group having 1 to 4 carbons and becomes an alkyl group of an alcohol that is formed in a subsequent reaction step. From the viewpoint of formation of a uniform film and storage stability, it is preferably a methyl group or an ethyl group.

The condensation reaction of a compound represented by Formula (A-2) proceeds as in Equations (a) and (b) below.

(a) R²¹-Si(̵OR²²)₃ + 3H₂O → R²¹-Si(̵OH)₃

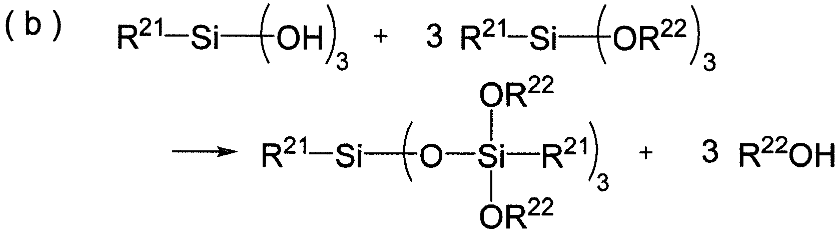

Equations (a) and (b) above are competitive reactions, and crosslinking continues so as to form a polymer.

Furthermore, the condensation reaction may involve not only a reaction between two molecules but also a crosslinking reaction between a large number of molecules to become a macromolecule to thus form a cured film.

Moreover, examples of commercially available siloxane oligomers include KR-217, KR-400, KR-500, X-40-2308, and X-40-9238 (all manufactured by Shin-Etsu Chemical Co., Ltd.). Products to which a curing agent, which is described later, has been added in advance are also commercially available, and examples thereof include KR-400 and KR-401 (Shin-Etsu Chemical Co., Ltd.).

The overcoat composition of the present invention contains one type of siloxane oligomer independently or contain two or more types and not particularly limited.

The content of siloxane oligomer in the overcoat composition of the present invention is preferably 10 to 90 mass % of the entire solid content and more preferably 50 to 80 mass %.

### <curing agent>

The overcoat composition preferably comprises at least one compound selected from the group consisting of an organometallic compound, an acid, an acid generator, a base and an base generator, from the viewpoint of enhancing the rate of curing.

Examples of organometallic compounds include organic tin compound such as dibutyltin diacetate, dibutyltin dioctylate or dibutyltin dilaurate; organic aluminum compounds such as aluminium tris(acetylacetonate), aluminium tris(ethylacetoacetate), aluminum diisopropoxy(ethylacetoacetate) or aluminum isopropoxybis(ethylacetoacetate); organic zirconium compounds such as zirconium acetylacetonate, zirconium trisacetylacetonate, zirconium tetrakis(ethylene glycol monomethylether), zirconium tetrakis(ethylene glycol monoethylether) or zirconium tetrakis(ethylene glycol monobutylether); organic titanium compounds such as tetrakis(ethylene glycol monomethyl ether) titanate, tetrakis(ethylene glycol monoethyl ether) titanate, tetrakis(ethylene glycol monobutyl ether) titanate.

The acids may be either of an inorganic acid and an organic acid; specific examples of the inorganic acids include chronic acid, nitric acid, sulfuric acid, and phosphoric acid. Specific examples of the organic acids include formic acid, acetic acid, oxalic acid and trifluoroacetic acid.

The acid-generating agent may be either a compound that generates an acidic substance upon heating (thermal acid generator) and/or a compound that generates an acid upon exposure to light (photo-acid generator). Among them, from the viewpoint of stability, a photo-acid generator is preferable.

Examples of photo-acid generators include known compounds and mixtures thereof such as a known photo-acid generator used in a photoinitiator for photocationic polymerization, a photo-decolorizing agent for a dye, a photo-discoloring agent, or a micro resist. A photo-acid generator is a substance whose addition imparts photosensitivity to an overcoat composition and enables photo-curing of a film thereof by irradiation with radiation such as for example light. Examples of the photo-acid generator include (1) various types of onium salts such as an iodonium salt, a sulfonium salt, a phosphonium salt, a diazonium salt, an ammonium salt, an iminium salt, an arsonium salt, a selenonium salt, and a pyridinium salt; (2) a sulfone compound such as a β-ketoester, a β-sulfonyl sulfone, or an α-diazo compound thereof; (3) a sulfonic acid ester such as an alkylsulfonic acid ester, a haloalkylsulfonic acid ester, an arylsulfonic acid ester, or an iminosulfonate; (4) a sulfonimide compound; (5) a diazomethane compound; and others, which are used as appropriate.

Among them, a diazonium salt, an iodonium salt, a sulfonium salt, and an iminium salt are preferable from the viewpoint of photosensitivity, compound stability, etc. Compounds described in paragraphs 0058 and 0059 of JP-A-2002-29162 can be cited as examples.

With regard to the photo-acid generator, it may be used on its own or two or more types may be used in combination, and it may be used in combination with the thermal acid generator. Other specific compounds or application methods may be referred to in the description of JP-A-2005-43876, etc.

The base may be an inorganic base or an organic base; examples of the inorganic base include ammonia, sodium hydroxide, and potassium hydroxide, and examples of the organic base include ethylenediamine and an alkanolamine.

Examples of a base-generating agent include one having a group represented by C₆H₅OOCNH-.

Among them, the curing agent is preferably an organometallic compound and/or a photo-acid generator, and it is more preferable for it to contain an organometallic compound and a photo-acid generator. The photo-acid generator is particularly preferably an onium salt.

The content of a curing agent in the overcoat composition is preferably 0.1 to 20 mass % of the entire solid content and more preferably 1 to 10 mass % It is preferable for the content of the curing agent to be within these ranges since good curing is obtained.

### <(Meth)acryloyl group-containing polysiloxane compound and/or (meth)acryloyl group-containing silane coupling agent>

The overcoat composition of the present invention preferably comprises an additive that enhances adhesion between the image layer and the protective layer, and examples of such an additive include a (meth)acryloyl group-containing polysiloxane compound and a (meth)acryloyl group-containing silane coupling agent. That is, the overcoat composition of the present invention preferably comprises a (meth)acryloyl group-containing polysiloxane compound and/or a (meth)acryloyl group-containing silane coupling agent. It is surmised that this allows a (meth)acryloyl group-containing polysiloxane compound and/or a (meth)acryloyl group-containing silane coupling agent to condense with part of a protective layer formed by a condensation reaction of an organosilicon compound, and this also allows crosslinking between a (meth)acryloyl group and a polymerizable compound of the image layer to be formed, thus improving adhesion between the protective layer and the image layer.

### ((Meth)acryloyl group-containing polysiloxane compound)

The (meth)acryloyl group-containing polysiloxane compound is a polysiloxane compound containing at least one (meth)acryloyl group, and preferred examples of the polysiloxane compound include the siloxane oligomers described above. That is, a partial hydrolysis-condensation product obtained using one type of silane compound and a partial cohydrolysis-condensation product obtained using two or more types of silane compounds may be used.

Examples of the (meth)acryloyl group-containing polysiloxane compound include those formed by organically modifying part of a straight-chain dimethylpolysiloxane with an alkyl or a polyether, and adding a (meth)acrylate group to the modified terminal.

A commercial product may be used as the (meth)acryloyl group-containing polysiloxane compound, and examples thereof include BYK-UV3500 and BYK-UV3570 (both manufactured by BYK-Chemie), TEGO Rad2100, 2200N, 2250, 2500, 2600, and 2700 (all manufactured by Degussa), and X-22-2445, X-22-2455, X-22-2457, X-22-2458, X-22-2459, X-22-1602, X-22-1603, X-22-1615, X-22-1616, X-22-1618, X-22-1619, X-22-2404, X-22-2474, X-22-174DX, X-22-8201, X-22-2426, X-22-164A, and X-22-164C (all manufactured by Shin-Etsu Chemical Co., Ltd.). They may be used on their own, or two or more types may be used as a mixture.

### ((Meth)acryloyl group-containing silane coupling agent)

Examples of the (meth)acryloyl group-containing silane coupling agent include compounds that are similar to the (meth)acryloyl group-containing silane coupling agent cited for the image layer, and a preferred range is also the same.

The overcoat composition of the present invention may employ a (meth)acryloyl group-containing polysiloxane compound and a (meth)acryloyl group-containing silane coupling agent in combination, but from the viewpoint of the effect thereof, it is preferable for it to comprise a (meth)acryloyl group-containing polysiloxane compound or a (meth)acryloyl group-containing silane coupling agent. With regard to the (meth)acryloyl group-containing polysiloxane compound and the (meth)acryloyl group-containing silane coupling agent, one type may be used on its own or two or more types for each may be used, there being no particular restrictions.

In the overcoat composition of the present invention, the total amount of (meth)acryloyl group-containing polysiloxane compound and/or (meth)acryloyl group-containing silane coupling agent is preferably 0.5 mass% to 20 mass% of the total solids content of the overcoat composition, and more preferably 1 mass% to 10 mass%.

### <Other components>

Furthermore, the overcoat composition of the present invention may comprise as necessary an organic solvent at 10 mass% to 90 mass% of the total mass of the overcoat composition in order to impart inkjet discharge suitability or spray printing suitability and impart storage stability, etc. It is also possible to add a surfactant, a polymer resin, or a pH adjusting agent in order to adjust solution properties, a solid substance (e.g. silica, etc.) in order to improve film physical properties, a stabilizer in order to impart storage stability, etc.

The organic solvent is not particularly limited as long as it can uniformly dissolve the silicone oligomer and is a liquid at room temperature, and for example the solvents below may be used.

Examples of alcohols include 1-butanol, isobutyl alcohol, *tert*-butyl alcohol, 2-pentanol, 3-pentanol, *tert*-pentyl alcohol, 3-methyl-2-butanol, neopentyl alcohol, allyl alcohol, propargyl alcohol, benzyl alcohol, cyclohexanol, 2-methylcyclohexanol, 1,3-butanediol, 2,3-butanediol, 2-methyl-2,4-pentanediol, 2-ethyl-1,3-hexanediol, 2-ethyl-2-(hydroxymethyl)-1,3-propanediol, 1,2,6-hexanetriol, furfuryl alcohol, tetrahydrofurfuryl alcohol, and diacetone alcohol.

Examples of ethers include dioxane, trioxane, tetrahydrofuran, tetrahydropyran, 1,2-dimethoxyethane, 1,2-diethoxyethane, diethylene glycol dimethyl ether, diethylene glycol diethyl ether, diethylene glycol dibutyl ether, methylal, and acetal.

Examples of ketones include acetone, methyl ethyl ketone, 2-pentanone, 3-pentanone, acetonylacetone, and cyclohexanone.

Examples of esters include methyl formate, ethyl formate, methyl acetate, ethyl acetate, 3-methoxybutyl acetate, methyl propionate, γ-butyrolactone, diethyl oxalate, dimethyl maleate, monoacetin, diacetin, triacetin, ethylene carbonate, propylene carbonate, triethyl phosphate, acetonitrile, methyl lactate, ethyl lactate, butyl lactate, 2-methoxyethyl acetate, 2-ethoxyethyl acetate, diethylene glycol monoethyl ether acetate, diethylene glycol monobutyl ether acetate, methyl acetoacetate, ethyl acetoacetate, and hexamethylphosphoric triamide.

Examples of nitrogen-containing compounds include pyridine, α-picoline, β-picoline, γ-picoline, ethylenediamine, propylenediamine, tetraethylenepentamine, formamide, *N*-methylformamide, *N*,*N*-dimethylformamide, *N*,*N*-diethylformamide, acetamide, *N*-methylacetamide, *N*,*N*-dimethylacetamide, *N*,*N*,*N'*,*N'*-tetramethylurea, ε-caprolactam, morpholine, and *N*-methylmorpholine.

### <Properties of overcoat composition>

Furthermore, the overcoat composition of the present invention is preferably a liquid at room temperature (25°C).

While taking into consideration dischargeability, the ink composition of the present invention has a viscosity at 25°C of preferably no more than 40 mPa·s, more preferably 5 to 30 mPa·s, and yet more preferably 7 to 30 mPa·s, in particular when the protecting layer is formed by inkjet printing. Furthermore, the viscosity of the ink composition at the discharge temperature (preferably 25°C to 80°C, and more preferably 25°C to 50°C) is preferably 3 to 15 mPa·s, and more preferably 3 to 13 mPa·s. With regard to the overcoat composition of the present invention, it is preferable that its component ratio is appropriately adjusted so that the viscosity at 25°C and at the discharge temperature are in the above-mentioned range. When the viscosity at room temperature is set to be high, penetration of the overcoat composition of the present invention into the substrate layer and the image layer can be prevented, and uncured monomer can be reduced. Furthermore, ink spreading when droplets of the overcoat composition have landed can be suppressed.

The surface tension of the overcoat composition of the present invention at 25°C is preferably 20 to 35 mN/m, and particularly preferably 23 to 33 mN/m. From the viewpoint of spreading and penetration, the surface tension is preferably at least 20 mN/m, and from the viewpoint of wettability it is preferably no greater than 35 mN/m.

### (a process for producing the multilayer structure)

A process for producing the multilayer structure of this invention comprises the steps below
(Step a¹) a step of forming, above the substrate layer (Layer 1), the image layer (Layer 2) by applying a composition comprising a colored pigment by means of inkjet printing or screen printing, and
(Step b¹) a step of forming, above Layer 2, the protective layer (Layer 3) by applying a composition comprising an organosilicon compound.

Furthermore, a process for producing the multilayer structure of this invention further comprises the steps below
(Step a²) a step of forming, above the substrate layer (Layer 1), the image layer (Layer 2) by applying a UV-curable composition comprising a colored pigment by means of inkjet printing or screen printing and subsequently curing the applied composition by means of UV exposure, and
(Step b²) a step of forming, above Layer 2, the protective layer (Layer 3) by applying a composition comprising an organosilicon compound.

A process for producing the multilayer structure of this invention preferably comprises the steps below
(Step a³) a step of forming, above the substrate layer (Layer 1), the image layer (Layer 2) by applying a UV-curable composition comprising a colored pigment by means of inkjet printing or screen printing and subsequently curing the applied composition by means of UV exposure,
(Step b³) a step of forming, above Layer 2, the protective layer (Layer 3) by applying a composition comprising an organosilicon compound, and
(Step c³) a step of carrying out UV exposure after forming Layer 3.

Furthermore, in above three processes for producing the multilayer structure of this invention, it preferably further comprises a step of carrying out heating after forming Layer 1, Layer 2, and Layer 3.

### (Step a¹, Step a², and Step a³)

Step a¹, Step a², and Step a³ are steps for forming an image layer above a substrate layer using the ink composition of the present invention. An image layer is provided by applying the ink composition of the present invention onto a substrate layer by means of inkjet printing or screen printing, and it is more preferable to form an image by means of inkjet printing.

Inkjet printing and screen printing may be carried out using a conventionally known method as appropriate.

The ink composition of the present invention is a UV-curable ink composition, and in this case there is a step in which after the ink composition is applied onto the substrate layer, the applied ink composition is cured by UV exposure.

In the present invention, inkjet recording equipment that can be used in inkjet printing is not particularly limited, and known inkjet recording equipment that can achieve an intended resolution may be chosen freely and used. That is, any known inkjet recording equipment, including a commercial product, can carry out discharge of the ink composition of the present invention onto the substrate layer in Step a¹, Step a², and Step a³ of the process for producing a multilayer structure of the present invention and, for example, the inkjet recording method and inkjet recording equipment described in paragraphs 0085 to 0094 of JP-A-2012-184404 may be referred to.

### (Step b¹, Step b², and Step b³)

Step b¹, Step b², and Step b³ are steps of forming a protective layer above the image layer using the overcoat composition of the present invention. A method of applying the overcoat composition is not particularly limited, but it is preferable to carry out application by an inkjet printing method, a screen printing method, or a spray printing method. The application method for the overcoat composition is not limited thereby; it may be selected as appropriate from known coating equipment according to the intended application, etc., and examples include an air doctor coater, a blade coater, a rod coater, a knife coater, a squeegee coater, a dip coater, a reverse roll coater, a transfer roll coater, a gravure coater, a kiss roll coater, a cast coater, a spray coater, a curtain coater, and an extrusion coater. Details may be referred to in Yuji Harasaki 'Coating Technology'.

Among them, an inkjet printing method and a screen printing method are more preferable, and an inkjet printing method is yet more preferable.

It is preferable for there to be a step of allowing to stand at around room temperature and a step of carrying out a thermal treatment at high temperature after Step b¹, Step b², and Step b³.

The step of allowing to stand at around room temperature is preferably carried out at a humidity of 60%RH to 100%RH and a temperature of 15°C to 30°C. It is preferable to allow a multilayer structure to stand in such an environment for 10 minutes to 60 minutes, and this enables the condensation reaction of the organosilicon compound to be promoted.

It is preferable for there to be a step of carrying out a thermal treatment at high temperature after the step of allowing to stand at around room temperature. In the step of carrying out a thermal treatment at high temperature, it is preferable to heat at 60°C to 400°C, more preferably at 80°C to 300°C, and yet more preferably at 100°C to 200°C. The treatment time is preferably 1 minute to 6 hours, more preferably 3 minutes to 3 hours, yet more preferably 5 minutes to 60 minutes, and particularly preferably 10 minutes to 30 minutes.

In the present invention, the process for producing a multilayer structure comprising the steps below, in this order, is preferable.
(step 1) a step of forming, above the substrate layer (Layer 1), the image layer (Layer 2) by applying a UV-curable composition comprising a colored pigment by means of inkjet printing or screen printing.
(step 2) a step of semi-curing the ink composition by UV exposure to the ink composition above the substrate layer (Layer 1).
(step 3) a step of forming, above substrate layer comprising the semi-cured ink composition, the protective layer (Layer 3) by applying a composition comprising an organosilicon compound.
(step 4) a step of subjecting UV exposure to the overcoat composition.
(step 5) a step of allowing to stand at around room temperature.
(step 6) a step of carrying out a thermal treatment at high temperature.

Step 1 above is the same as the step of applying an ink composition onto a substrate layer in Steps a¹, a², and a³ described above.

In Step 2, the ink composition is not completely cured, and UV exposure is carried out at a degree of exposure intensity such that the surface layer is maintained in a liquid state. That is, it is preferable to adjust the exposure intensity so as to achieve a degree of cure state (semi-cured state) in which when a constant pressure is applied to the image layer with plain paper after UV exposure in Step 2, about 5 to 50 mass% of the ink composition is transferred to the plain paper.

Subsequently, in Step 3 the overcoat composition of the present invention is preferably applied by an inkjet printing method.

After that, in Step 4 the overcoat composition of the present invention is subjected to UV exposure. In Step 4, the image layer in a semi-cured state is exposed through the protective layer to thus be completely cured. Furthermore, when the overcoat composition of the present invention comprises a (meth)acryloyl group-containing polysiloxane compound and/or a (meth)acryloyl group-containing silane coupling agent, a polymerization reaction with uncured polymerizable compound in the image layer proceeds, thus further improving the adhesion. Moreover, when the overcoat composition of the present invention comprises a photo-acid generator, a condensation reaction of the organosilicon compound is promoted by the UV exposure in Step 4.

Steps 5 and 6 are as described above.

### (Multilayer structure)

In the multilayer structure of the present invention, the thickness of the substrate layer is not particularly limited, but when it is used in a patterned tile application, the thickness is preferably 0.5 to 10 cm, more preferably 1 to 10 cm, and yet more preferably 1 to 5 cm.

The thickness of the image layer is not particularly limited, but from the viewpoint of achieving sufficient coloration, it is preferably 0.5 to 40 µm, more preferably 1 to 20 µm, and yet more preferably 1 to 15 µm.

Furthermore, the thickness of the protective layer is not particularly limited, but from the viewpoint of obtaining sufficient durability, it is preferably 0.5 to 40 µm, more preferably 1 to 20 µm, and yet more preferably 1 to 15 µm.

The multilayer structure of the present invention may be used in various applications.

Specifically, it may particularly preferably be used as a patterned tile for indoor flooring or walls. Other than that, it may be used in glass decoration, outdoor exterior walls, furniture decoration, ceramics, etc.

### (Composition set)

The composition set is a set of compositions for producing the multilayer structure of the present invention, and comprises a composition containing a colored pigment for forming Layer 2 and a composition containing an organosilicon compound for forming Layer 3. That is, it is a set comprising the ink composition of the present invention for forming Layer 2 and the overcoat composition of the present invention for forming Layer 3.

When a multicolor image is formed, it is preferably a set comprising ink compositions of the respective colors and the overcoat composition.

The present invention is explained more specifically below by reference to Examples and Comparative Examples. However, the present invention should not be construed as being limited by these Examples. 'Parts' in the description below denotes 'parts by mass' unless otherwise specified, and '%' denotes 'mass%'.

Materials and equipment used in the Examples of the present invention are as follows.

### (Material for forming Layer 1)

150 mm square ceramic tile substrate
150 mm square glass
(Material for forming Layer 2)
Ink 1: UV-curable ink UVIJET KO series
Ink 2: 100 parts by mass of each color from the UV-curable ink UVIJET KO series mixed with 2.5 parts by mass of acrylate-modified silane coupling agent (KBM-5103, 3-acryloxypropyltrimethoxysilane (Shin-Etsu Chemical Co., Ltd.))
Ink 3: 100 parts by mass of each color from the UV-curable ink UVIJET KO series mixed with 2.5 parts by mass of phosphoric acid ester group-containing acrylate (2-acryloyloxyethyl phosphate (Polysciences))

As described in the MSDS, the inks from the UVIJET KO series are UV-curable inkjet inks containing a pigment, 70 to 90 mass% of a radically polymerizable compound such as dipropylene glycol diacrylate, 5 to 10 mass% of a photopolymerization initiator such as diphenyl(2,4,6-trimethylbenzoyl)phosphine oxide, and other additives.

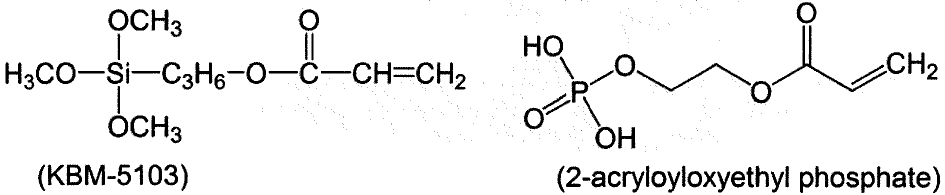

### (Materials for forming Layer 3)

Coating liquid A: KR-400 silicone coating agent (polysiloxane oligomer liquid containing curing catalyst, Shin-Etsu Chemical Co., Ltd.)
Coating liquid B: 100 parts by mass of KR-400 silicone coating agent (Shin-Etsu Chemical Co., Ltd.) mixed with 2.5 parts by mass of a methacrylate-modified silane coupling agent (KBM-503, 3-methacryloxypropyl trimethoxysilane (Shin-Etsu Chemical Co., Ltd.))
Coating liquid C: 100 parts by mass of KR-400 silicone coating agent (Shin-Etsu Chemical Co., Ltd.) mixed with 2.5 parts by mass of an acrylate-modified polysiloxane oligomer (KR-513 (Shin-Etsu Chemical Co., Ltd.))
Coating liquid D: UV-curable coating liquid (LL391 (Fujifilm Speciality Ink Systems))
Coating liquid E: 100 parts by mass of KR-400 silicone coating agent (polysiloxane oligomer liquid containing curing catalyst, Shin-Etsu Chemical Co., Ltd.) mixed with 5 parts by mass of a photo-acid generator (Triarylsulfonium hexafluorophosphate salts, mixed (407216 Aldrich), Aldrich)

The KR-400 silicone coating agent is a silicone coating agent comprising a siloxane oligomer, an aluminum chelating compound as a curing agent, and a dilution solvent.

### (Printer 1 (for processing Layer 2))

Luxel Jet 550GTW (Fujifilm Corporation)

### (Printer 2 (for processing Layer 3))

KEGON (Afit Corporation) equipped with four CA4 heads manufactured by Toshiba Tec Corporation (equipped with metal halide lamp)

### (Example 1) (Not in accordance with the invention)

Red, blue, and green images were printed on a ceramic tile substrate using Printer 1 charged with Ink 1. Printing conditions were Fineart mode, a lamp strength of 11 (both lamps being turned ON), and no color profile (no limitation for total amount of ink). It was confirmed that when printing was carried out under these conditions, there was no ink transfer when plain paper was pressed against the image after printing.

A coating layer was applied to the printed material using Printer 2 charged with coating liquid A. The transport speed and the discharge voltage were adjusted so that the fired droplet density was 600 x 600 dpi and the droplet volume per pixel was 42 ± 2 pL.

The printed material with the coating liquid applied was allowed to stand under constant temperature and constant humidity conditions for 40 minutes. In this process, the temperature was adjusted to 25°C, and the humidity to 60%RH. Subsequently, it was subjected to a thermal treatment in an oven set at 150°C for 20 minutes, thus giving an evaluation sample.

Pencil hardness, an adhesion test, and a weatherability test were carried out under the conditions below. The results are shown in Table 1.

### (Examples 2 to 8 and Comparative Examples 1 and 2)

Multilayer structures were prepared under the same conditions as in Example 1 using combinations of ink, coating liquid, and substrate as described in Table 1, and the same tests were carried out.

### (Example 9) (Not in accordance with the invention)

Red, blue, and green images were printed on a ceramic tile substrate using Printer 1 charged with Ink 1. Printing conditions were Fineart mode, a lamp strength of 5 (only one of two lamps being turned ON), and no color profile (no limitation for total amount of ink). It was confirmed that when printing was carried out under these conditions, 10% to 20% of the ink was transferred when plain paper was pressed against the image after printing.

A coating liquid was applied to the printed material using Printer 2 charged with coating liquid A. The transport speed and the discharge voltage were adjusted so that the fired droplet density was 600 x 600 dpi and the droplet volume per pixel was 42 ± 2 pL. Furthermore, after applying the coating liquid, UV exposure was carried out (irradiation energy 150 mJ/cm²).

The printed material with the coating liquid applied was allowed to stand under constant temperature and constant humidity conditions for 40 minutes. In this process, the temperature was adjusted to 25°C, and the humidity to 60%RH. Subsequently, it was subjected to a thermal treatment in an oven set at 150°C for 20 minutes, thus giving an evaluation sample.

Pencil hardness, an adhesion test, and a weatherability test were carried out under the conditions below. The results are shown in Table 1.

### (Example 10) (Not in accordance with the invention)

Red, blue, and green images were printed on a ceramic tile substrate using Printer 1 charged with Ink 1. Printing conditions were Fineart mode, a lamp strength of 5 (only one of two lamps being turned ON), and no color profile (no limitation for total amount of ink). It was confirmed that when printing was carried out under these conditions, 10% to 20% of the ink was transferred when plain paper was pressed against the image after printing.

A coating liquid was applied to the printed material using Printer 2 charged with coating liquid E. The transport speed and the discharge voltage were adjusted so that the fired droplet density was 600 × 600 dpi and the droplet volume per pixel was 42 ± 2 pL. Furthermore, after applying the coating liquid, UV exposure was carried out (irradiation energy 150 mJ/cm²).

The printed material with the coating liquid applied was allowed to stand under constant temperature and constant humidity conditions for 20 minutes. In this process, the temperature was adjusted to 25°C, and the humidity to 60%RH. Subsequently, it was subjected to a thermal treatment in an oven set at 150°C for 10 minutes, thus giving an evaluation sample.

Pencil hardness, an adhesion test, and a weatherability test were carried out under the conditions below. The results are shown in Table 1.

### (Example 11) (Not in accordance with the invention)

Red, blue, and green images were printed on a ceramic tile substrate using a screen printer (Svecia MATIC) with a UV-curable screen ink (Omniplus UL, Fujifilm Speciality Ink Systems) as a material for forming Layer 2. It was confirmed that there was no ink transfer when plain paper was pressed against the image after printing.

A coating layer was applied to the printed material using Printer 2 charged with coating liquid A. The transport speed and the discharge voltage were adjusted so that the fired droplet density was 600 x 600 dpi and the droplet volume per pixel was 42 ± 2 pL.

The printed material with the coating liquid applied was allowed to stand under constant temperature and constant humidity conditions for 40 minutes. In this process, the temperature was adjusted to 25°C, and the humidity to 60%RH. Subsequently, it was subjected to a thermal treatment in an oven set at 150°C for 20 minutes, thus giving an evaluation sample.

Pencil hardness, an adhesion test, and a weatherability test were carried out in the same manner as in Example 1.

As described in the MSDS, the inks of the Omniplus UL series used were UV-curable screen inks comprising a pigment, 70 to 90 mass% of radically polymerizable compounds such as 2-phenoxyethyl acrylate and isobornyl acrylate, 1 to 5 mass% of a photopolymerization initiator such as diphenyl(2,4,6-trimethylbenzoyl)phosphine oxide, and other additives.

### (Example 12) (Not in accordance with the invention)

Red, blue, and green images were printed on a ceramic tile substrate using Printer 2 charged with a solvent inkjet ink (Color+ QJ Series, Fujifilm Speciality Ink Systems) as a material for forming Layer 2. It was confirmed that there was no ink transfer when, after printing, the image was allowed to stand in a temperature-controlled chamber at 60°C for 1 hour and plain paper was pressed against it.

A coating layer was applied to the printed material using Printer 2 charged with coating liquid A. The transport speed and the discharge voltage were adjusted so that the fired droplet density was 600 x 600 dpi and the droplet volume per pixel was 42 ± 2 pL.

The printed material with the coating liquid applied was allowed to stand under constant temperature and constant humidity conditions for 40 minutes. In this process, the temperature was adjusted to 25°C, and the humidity to 60%RH. Subsequently, it was subjected to a thermal treatment in an oven set at 150°C for 20 minutes, thus giving an evaluation sample.

Pencil hardness, an adhesion test, and a weatherability test were carried out in the same manner as in Example 1.

As described in the MSDS, the inks of the Color+ QJ Series used were solvent inkjet inks comprising a pigment, 70 to 90 mass% of solvents such as ethylene glycol monobutyl ether acetate and propylene glycol-1-methyl ether-2-acetate, and other additives.

### (Evaluation conditions)

Pencil hardness: carried out by a method in accordance with scratch hardness (pencil method, JIS K5600-5-4 (ISO/DIN 15184)).
Adhesion test: carried out by a method in accordance with a cross-cut test (JIS K5600-5-6 (ISO2409)). The test results were classified into six grades of 0 to 5, with grade 0 being the best.
Weatherability test (change in hue): an evaluation sample was aged using an Xe tester manufactured by Q-Lab (machine type: Q-SUN, conditions: in accordance with SAEJ2527) (1,200 hours). Change in hue (La*b*) was obtained from a comparison of that before and that after aging. At the same time, the sample after aging was subjected to pencil hardness and adhesion tests. Measurement of hue was carried out by a colorimeter (SpectroEye, Xrite) with timings before and after the test. The evaluation criteria were as follows.

Evaluation criteria for hue change
A: ΔE no greater than 3.0
B: ΔE greater than 3.0 but no greater than 6.0
C: ΔE greater than 6.0 but no greater than 10.0
D: ΔE greater than 10

**[Table 1]**

| | | | Initial | | Aged sample | | |
|---|---|---|---|---|---|---|---|
| | | | Pencil hardness | Adhesion | Pencil hardness | Adhesion | Hue change |
| Example 1 * | Substrate | Ceramic tile | 8H | 1 | 7H | 2 | C |
| | Ink | Ink 1 | | | | | |
| | Coating Liquid | Coating Liquid A | | | | | |
| Example 2 * | Substrate | Glass | 8H | 2 | 7H | 3 | C |
| | Ink | Ink 1 | | | | | |
| | Coating Liquid | Coating Liquid A | | | | | |
| Example 3 | Substrate | Ceramic tile | 8H | 0 | 7H | 1 | B |
| | Ink | Ink 2 | | | | | |
| | Coating Liquid | Coating Liquid A | | | | | |
| Example 4 | Substrate | Glass | 8H | 1 | 7H | 2 | B |
| | Ink | Ink 3 | | | | | |
| | Coating Liquid | Coating Liquid A | | | | | |
| Example 5 * | Substrate | Ceramic tile | 8H | 0 | 7H | 1 | B |
| | Ink | Ink 1 | | | | | |
| | Coating Liquid | Coating Liquid B | | | | | |
| Example 6 | Substrate | Ceramic tile | 8H | 0 | 7H | 1 | B |
| | Ink | Ink 2 | | | | | |
| | Coating Liquid | Coating Liquid C | | | | | |
| Example 7 | Substrate | Ceramic tile | 8H | 0 | 7H | 0 | A |
| | Ink | Ink 3 | | | | | |
| | Coating Liquid | Coating Liquid C | | | | | |
| Example 8 | Substrate | Glass | 8H | 0 | 7H | 0 | A |
| | Ink | Ink 3 | | | | | |
| | Coating Liquid | Coating Liquid C | | | | | |
| Example 9 * | Substrate | Ceramic tile | 8H | 0 | 7H | 0 | A |
| | Ink | Ink 1 | | | | | |
| | Coating Liquid | Coating Liquid A | | | | | |
| Example 10 * | Substrate | Ceramic tile | 8H | 0 | 7H | 0 | A |
| | Ink | Ink 1 | | | | | |
| | Coating Liquid | Coating Liquid E | | | | | |
| Example 11 * | Substrate | Ceramic tile | 8H | 1 | 7H | 2 | C |
| | Ink | Screen UV ink | | | | | |
| | Coating Liquid | Coating Liquid A | | | | | |
| Example 12 * | Substrate | Ceramic tile | 8H | 2 | 7H | 3 | C |
| | Ink | Solvent IJ ink | | | | | |
| | Coating Liquid | Coating Liquid A | | | | | |
| Comparative Example 1 | Substrate | Ceramic tile | HB | 3 | 2B | 5 | C |
| | Ink | Ink 1 | | | | | |
| | Coating Liquid | Coating Liquid D | | | | | |
| Comparative Example 2 | Substrate | Glass | HB | 4 | 2B | 5 | C |
| | Ink | Ink 1 | | | | | |
| | Coating Liquid | Coating Liquid D | | | | | |

| | | | | | | | |
|---|---|---|---|---|---|---|---|
| * Not in accordance with the invention | | | | | | | |

## Claims

1. A process for producing a multilayer structure comprising the steps of:
(a) forming, above a substrate layer (Layer 1), an image layer (Layer 2) by applying a UV-curable composition comprising a colored pigment, a radically polymerizable compound comprising a (meth)acryloyl group-containing silane coupling agent and/or a phosphoric acid ester group-containing (meth)acrylate compound and a radical polymerization initiator by means of inkjet printing or screen printing and subsequently radically polymerizing the applied composition by means of UV exposure, and
(b) forming, above Layer 2, a protective layer (Layer 3) by applying a composition comprising an organosilicon compound and using a condensation reaction of the organosilicon compound.

2. A process according to Claim 1, wherein the organosilicon compound in Layer 3 comprises a siloxane oligomer.

3. A process according to Claim 1 or Claim 2, wherein Layer 1 is glass or ceramic.

4. A process according to any preceding claim, wherein the organosilicon compound in Layer 3 comprises a (meth)acryloyl group-containing polysiloxane compound and/or a (meth)acryloyl group-containing silane coupling agent.

5. A process according to any preceding claim, wherein Layer 3 is a layer formed by a condensation reaction of a composition comprising an organosilicon compound and a curing agent.

6. A process according to any preceding claim, further comprising carrying out UV exposure after forming Layer 3.

7. A process according to any preceding claim, further comprising heating after forming Layer 1, Layer 2 and Layer 3.

## Patentansprüche

1. Verfahren zur Erzeugung einer Vielschichtstruktur, enthaltend die folgenden Schritte:
(a) Bilden einer Bildschicht (Schicht 2) oberhalb einer Substratschicht (Schicht 1) durch Auferlegung einer UV-härtbaren Zusammensetzung, enthaltend ein gefärbtes Pigment, eine radikalisch polymerisierbare Verbindung, die ein (Meth)acryloylgruppen-haltiges Silankupplungsmittel und/oder eine Phosphorsäureestergruppen-haltige (Meth)acrylatverbindung enthält, und einen Radikal-Polymerisationsinitiator enthält, durch Tintenstrahldruck oder Siebdruck und anschließendes radikalisches Polymerisieren der aufgetragenen Zusammensetzung durch UV-Belichtung und
(b) Bilden einer Schutzschicht (Schicht 3) oberhalb der Schicht 2 durch Auftragen einer Zusammensetzung, die eine Organosiliciumverbindung enthält, und unter Verwendung einer Kondensationsreaktion der Organosiliciumverbindung.

2. Verfahren gemäß Anspruch 1, worin die Organosiliciumverbindung in der Schicht 3 ein Siloxanoligomer enthält.

3. Verfahren gemäß Anspruch 1 oder 2, worin die Schicht 1 Glas oder Keramik ist.

4. Verfahren gemäß einem der vorhergehenden Ansprüche, worin die Organosiliciumverbindung in der Schicht 3 eine (Meth)acryloylgruppen-haltige Polysiloxanverbindung und/oder ein (Meth)acryloylgruppen-haltiges Silankupplungsmittel enthält.

5. Verfahren gemäß einem der vorhergehenden Ansprüche, worin die Schicht 3 eine Schicht ist, die durch eine Kondensationsreaktion einer Zusammensetzung gebildet ist, die eine Organosiliciumverbindung und ein Härtungsmittel enthält.

6. Verfahren gemäß einem der vorhergehenden Ansprüche, weiterhin enthaltend die Durchführung einer UV-Belichtung nach der Bildung der Schicht 3.

7. Verfahren gemäß einem der vorhergehenden Ansprüche, weiterhin enthaltend das Erwärmen nach Bildung der Schicht 1, Schicht 2 und Schicht 3.

## Revendications

1. Processus pour produire une structure multicouche comprenant les étapes consistant à :
(a) former, au-dessus d'une couche de substrat (Couche 1), une couche d'image (Couche 2) en appliquant une composition durcissable aux UV comprenant un pigment coloré, un composé radicalement polymérisable comprenant un agent de couplage silane contenant un groupe (méth)acryloyle et/ou un composé (méth)acrylate contenant un groupe ester d'acide phosphorique et un initiateur de polymérisation par radicaux au moyen d'une impression par jet d'encre ou d'une impression d'écran et, par la suite, polymériser radicalement la composition appliquée au moyen d'une exposition aux UV, et
(b) former, au-dessus de la Couche 2, une couche de protection (Couche 3) en appliquant une composition comprenant un composé organosilicium et en utilisant une réaction de condensation du composé organosilicium.

2. Processus selon la revendication 1, dans lequel le composé organosilicium dans la Couche 3 comprend un oligomère de siloxane.

3. Processus selon la revendication 1 ou la revendication 2, dans lequel la Couche 1 est du verre ou de la céramique.

4. Processus selon l'une quelconque des revendications précédentes, dans lequel le composé organosilicium dans la Couche 3 comprend un composé polysiloxane contenant un groupe (méth)acryloyle et/ou un agent de couplage silane contenant un groupe (méth)acryloyle.

5. Processus selon l'une quelconque des revendications précédentes, dans lequel la Couche 3 est une couche formée par une réaction de condensation d'une composition comprenant un composé organosilicium et un agent de durcissement.

6. Procédé selon l'une quelconque des revendications précédentes, comprenant en outre l'étape consistant à réaliser une exposition aux UV après la formation de la Couche 3.

7. Procédé selon l'une quelconque des revendications précédentes, comprenant en outre l'étape consistant à chauffer après la formation de la Couche 1, de la Couche 2 et de la Couche 3.
